(19) Europäisches Patentamt

European Patent Office

Office européen des brevets

(11) EP 0 755 023 B1

(12) **FASCICULE DE BREVET EUROPEEN**

(45) Date de publication et mention
de la délivrance du brevet:
**02.05.2003 Bulletin 2003/18**

(51) Int Cl.$^7$: **G06T 5/20**

(21) Numéro de dépôt: **96202017.8**

(22) Date de dépôt: **16.07.1996**

(54) **Procédé de filtrage spatial du bruit dans une image numérique, et dispositif mettant en oeuvre ce procédé**

Verfahren und Vorrichtung zur Raumfilterung von verrauschten numerischen Bildern

Method of filtering spatial noise in a digital image and apparatus for carrying it out

(84) Etats contractants désignés:
**DE FR GB NL**

(30) Priorité: **21.07.1995 FR 9508893**

(43) Date de publication de la demande:
**22.01.1997 Bulletin 1997/04**

(73) Titulaire: **Koninklijke Philips Electronics N.V.**
**5621 BA Eindhoven (NL)**

(72) Inventeurs:
• **Florent, Raoul**
**75008 Paris (FR)**
• **Mequio, Claude**
**75008 Paris (FR)**

(74) Mandataire: **Lottin, Claudine et al**
**Société Civile S.P.I.D.**
**156, Boulevard Haussmann**
**75008 Paris (FR)**

(56) Documents cités:
**EP-A- 0 352 016**     **EP-A- 0 504 633**

• **IEEE TRANSACTIONS IN GEOSCIENCE AND REMOTE SENSING, vol. 26, no. 6, Novembre 1988, NEW YORK, NY, USA, pages 832-838, XP000112679 VASSILIOU A. A. ET AL.: "On the Application of Averaging Median Filters in Remote Sensing"**
• **PROCEEDINGS OF THE 1991 CHINA INTERNATIONAL CONFERENCE ON CIRCUITS AND SYSTEMS, vol. 2, 16 - 17 Juin 1991, SHENZHEN, CHINA, pages 793-796, XP002016619 HONBING ZHOU ET AL.: "Weighted FIR Median Hybrid Filters for Image Processing"**
• **IEEE TRANSACTIONS ON PATTERN ANALYSIS AND MACHINE INTELLIGENCE , vol. PAMI-9, no. 1, Janvier 1987, pages 74-90, XP002016620 NIEMINEN A. ET AL.: "A New Class of Detail-Preserving Filters for Image Processing"**

## Description

L'invention concerne un procédé de filtrage spatial du bruit dans une image numérique.

L'invention concerne également un dispositif mettant en oeuvre ce procédé.

L'invention trouve particulièrement son application dans le traitement d'images médicales formées dans un mode fluoroscopique de rayons X, au moyen d'un système où le faisceau de rayons X a une faible intensité, fournissant par suite des images bruitées et peu contrastées qui doivent être filtrées afin d'en extraire le bruit, sans en détériorer les détails.

Le mode fluoroscopique de rayons X est utilisé par exemple pour suivre en temps réel une opération médicale durant laquelle un outil de diamètre extrêmement petit tel qu'un cathéter est introduit ou déplacé dans la zone observée sur un patient.

Un procédé de filtrage du bruit dans une image numérique est déjà connu par la publication intitulée "A new class of Detail-Preserving Filters for Image Processing" par Ari NIEMINEN, et alii, in "IEEE TRANSACTIONS ON PATTERN ANALYSIS AND MACHINE INTELLIGENCE VOL.PAMI-9, N°1, JANUARY 1987, PP. 74-90".

Cette publication décrit un procédé de filtrage utilisant une nouvelle classe de filtres spatiaux. Cette nouvelle classe comprend des structures de filtres linéaires à réponse impulsionnelle, appelés "FIR". Le procédé divulgué par ce document cité inclut des combinaisons des résultats des filtres linéaires dans des filtres médians, avec plusieurs niveaux de combinaison. Il est enseigné qu'un tel procédé permet de préserver les bords des objets dans l'image, et ainsi de préserver les détails. Ce procédé inclut la définition d'une fenêtre glissante sur l'image numérique à traiter centrée sur un pixel courant, et la définition de masques dans cette fenêtre pour permettre la réalisation d'un certain nombre de moyennes des intensités des pixels situés autour du pixel central de la fenêtre. Par exemple, une moyenne est réalisée sur les intensités des pixels situés sur la même ligne de pixels que le pixel central, une moyenne est réalisée sur les intensités des pixels situés sur la même colonne que le pixel central ; les moyennes d'intensité peuvent aussi être réalisées sur des pixels des diagonales de la fenêtre, cette dernière étant carrée dans l'exemple décrit. Les résultats de ces moyennes, qui constituent des filtrages linéaires (FIR) appelés filtrages de base, sont combinés dans des filtres médians (FMH). Par exemple, les moyennes calculées sur les intensités des pixels de la ligne du pixel central à gauche et à droite du pixel central respectivement, sont combinées dans un filtre médian avec l'intensité du pixel central, et un premier résultat est fourni ; puis les moyennes calculées sur les pixels de la colonne du pixel central vers le haut et vers le bas respectivement sont combinées avec l'intensité du pixel central dans un filtre médian, et un second résultat est fourni ; puis les premier et second résultats sont combinés dans un filtre médian avec l'intensité du pixel central, et un autre résultat est fourni. Selon le nombre de filtrages de base calculés dans la fenêtre, et le nombre d'entrées des filtres médians, le nombre d'étapes de combinaisons pour obtenir le résultat, appelées niveaux de combinaisons, peut être plus ou moins grand.

Un autre procédé de filtrage du bruit dans une image numérique est également déjà connu par la publication intitulée "Performance Evaluation of Some Noise Reduction Methods" par Wen-Yen WU et alii, dans "GRAPHICAL MODELS AND IMAGE PROCESSINGS, vol.54, N°2, March 1992, pp.134-146.

Cette seconde publication décrit différents procédés de filtrage du bruit incluant d'une manière générale d'abord la sélection, selon des critères donnés, de pixels dans une image numérique sur l'intensité desquels on réalise une combinaison. Cette combinaison peut être une combinaison linéaire telle qu'une moyenne. A cet effet, ce procédé inclut la définition d'une fenêtre glissante sur l'image numérique à traiter, centrée sur un pixel courant, et la sélection de pixels dans cette fenêtre. Un critère de sélection peut porter sur l'intensité des pixels sélectionnés. Dans un exemple (SIG), les pixels sélectionnés sont ceux dont la différence d'intensité vis-à-vis du pixel courant situé au centre de la fenêtre, est inférieure à un seuil donné qui dépend de la variance du bruit ($\sigma^2$) ; dans un autre exemple (KNN), un nombre K donné de pixels ayant les intensités les plus proches de celles du pixel courant est sélectionné. Après l'opération de sélection des pixels dans la fenêtre glissante carrée, leur intensité est combinée soit en effectuant une moyenne (MEAN), soit par un filtrage MEDIAN (MED).

Un problème qui se pose dans le traitement du bruit des images en fluoroscopie est que ces images contiennent en général des détails très fins ou la représentation d'objets très petits, comme par exemple un cathéter introduit lors de l'opération par le praticien, ce cathéter ayant la forme d'un fil dont la dimension transversale est de quelques pixels. Dans ce domaine, il est donc indispensable d'avoir recours à une méthode de filtrage du bruit qui conserve les détails.

Toutes les méthodes décrites dans les deux publications citées précédemment au titre d'état de la technique sont capables de fournir un filtrage de l'image bruitée en conservant les détails.

Cependant, les méthodes connues des documents cités posent toutes un même problème : les images reconstruites à l'aide de ces méthodes montrent des TACHES (PATCHES). Ceci est dû au fait que ces méthodes reposent sur l'utilisation d'une fenêtre glissante dont le centre est déplacé d'un pixel sur l'image après la mise en oeuvre de chaque ensemble d'étapes de calcul décrit dans l'une ou l'autre des publications citées. Ainsi, l'aire de recouvrement des fenêtres correspondant à deux pixels adjacents est importante, d'où il résulte que la contribution du bruit résiduel dans ces deux fenêtres est très corrélée.

Un but de la présente invention est de proposer un procédé de filtrage spatial qui ne génère pas de TACHES de bruit.

Un but particulier de l'invention est de proposer un tel procédé capable de produire une élimination très poussée du bruit, avec préservation des contours des objets dans l'image, et avec préservation du contraste de l'image.

Ces buts sont atteints par un procédé de filtrage spatial du bruit dans une image ayant la forme d'une matrice bidimensionnelle de pixels ayant des valeurs d'intensité numérisées bruitées, ce procédé comprenant des étapes de :

> a) sélection, dans une fenêtre glissante centrée sur un pixel courant d'un nombre ($N \neq 0$) de filtres élémentaires orientés aléatoires ayant des supports avec un axe d'orientation passant par le pixel courant et des caractéristiques dont une ou plusieurs ont des valeurs aléatoires,
> b) combinaison des intensités des pixels sur lesdits supports individuellement, fournissant une intensité élémentaire, et combinaison des intensités élémentaires, fournissant une intensité filtrée à appliquer au pixel courant.

Ce procédé présente l'avantage de ne pas générer de TACHES de bruit résiduel dans les images, et de ne pas faire apparaître non plus des motifs dus à la forme des supports des filtres.

Un dispositif pour l'aide à l'observation d'une image médicale comprend :

> un système pour fournir des données d'une image sous forme de matrice bidimensionnelle de pixel ayant des valeurs d'intensité numérisées,
> un système d'affichage pour l'affichage de l'image,
> un système de traitement d'images ayant accès aux données d'image, et au système d'affichage, ce système de traitement d'image étant arrangé pour effectuer au moins des étapes de :
>
> > a) sélection, dans une fenêtre glissante centrée sur un pixel courant d'un nombre ($N \neq 0$) de filtres élémentaires orientés aléatoires ayant des supports avec un axe d'orientation passant par le pixel courant et des caractéristique dont une ou plusieurs ont des valeurs aléatoires,
> > b) combinaison des intensités des pixels sur lesdits supports individuellement, fournissant une intensité élémentaire, et combinaison des intensités élémentaires, fournissant une intensité filtrée à appliquer au pixel courant.

Ce dispositif présente l'avantage de restaurer une image médicale bruitée et peu contrastée à l'origine, en préservant les plus fins détails, et sans TACHES de bruit.

L'invention est décrite ci-après en détail en référence avec les figures schématiques annexées dont :

- la FIG.1 représente un dispositif à rayons X pour la formation d'images radiologiques ou fluoroscopiques,
- la FIG.2 représente le passage d'une fenêtre WD (x,y) dans une image J bruitée,
- les FIG.3A à 3D montrent des supports de filtres pour mettre en oeuvre une méthode de filtrage spatial par SELECTION-COMBINAISON,
- les FIG.4A à 4D illustrent la combinaison des filtres des FIG.3A à 3D,
- les FIG.5A et 5D montrent des supports de filtres FMH,
- les FIG.6A à 6C illustrent la combinaison des filtres des FIG.5A à 5D,
- les FIG.7A et 7B illustrent une méthode de détermination de l'écart type du bruit.

## I/ Dispositif à rayons X

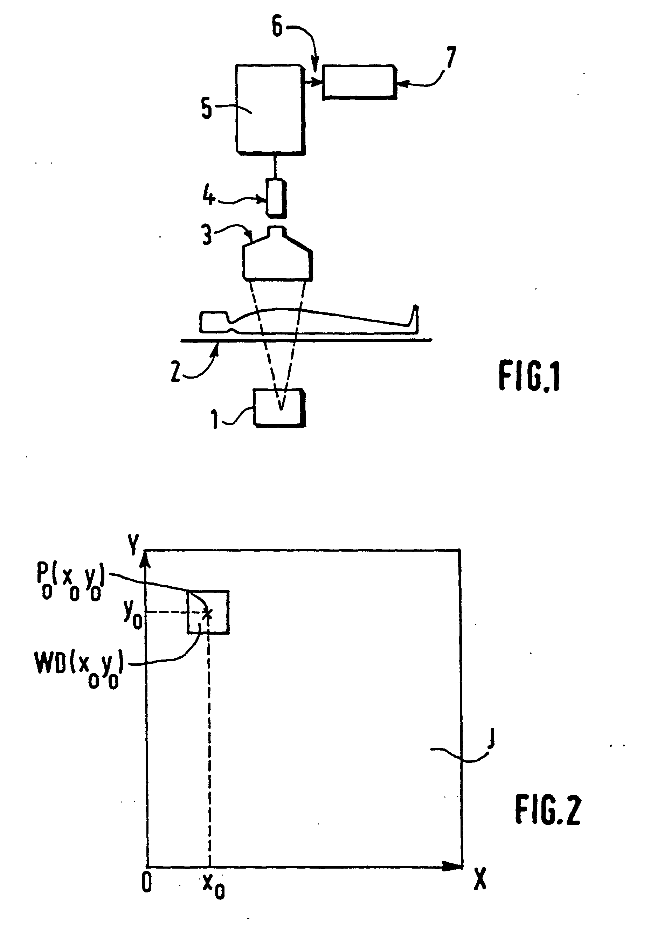

En référence avec la FIG.1, un système de radiographie numérisée comprend une source 1 de rayons X ; une table mobile 2 pour recevoir un patient ; un dispositif intensificateur d'image 3 couplé à un tube vidéo 4, qui fournit des données d'images à un système 5 de traitement numérique d'image comprenant un microprocesseur. Ce dernier comprend plusieurs sorties dont une sortie 6 couplée à un moniteur 7 pour la visualisation des images radiographiques ou des images d'intensité d'une zone observée du patient.

Une image radiographique numérisée se présente sous forme d'une matrice bidimensionnelle de pixels. L'image radiographique numérisée peut contenir, par exemple, 512 x 512 ou 1024 x 1024 pixels codés sur 8 bits ou 10 bits. Chaque pixel peut être ainsi affecté d'un parmi 256 ou 1024 niveaux d'intensité. Par exemple les régions sombres ont un niveau de gris faible, et les régions claires de l'image ont un niveau de gris élevé.

L'image numérisée peut être obtenue en mode fluoroscopique de rayons X. L'invention peut trouver une application particulièrement avantageuse dans le filtrage d'images angiographiques. Les prises de vue peuvent être effectuées sous forme de séquence d'images à un taux de plusieurs images par secondes, par exemple 30 images par seconde en mode fluoroscopique standard, ou 12,5 images par seconde en mode fluoroscopique pulsé.

L'élimination du bruit sans création de TACHES DE BRUIT doit alors pouvoir être faite sur chaque image de la séquence arrivant en temps réel. Le procédé de filtrage doit donc être rapide, et ne pas détruire les détails.

Dans tous les cas, la présente invention ne tient pas compte de la méthode par laquelle l'image numérique a été obtenue, ni de la nature des objets qu'elle représente, mais concerne seulement le filtrage de cette image considérée seule et non en relation avec d'autres images de la séquence pour éliminer le bruit sans générer de TACHES de bruit.

## II/ Procédé de filtrage spatial

En référence avec la FIG.2, le procédé de filtrage spatial comprend la définition, dans une image J à traiter, d'un pixel appelé pixel courant $P_0(x_0,y_0)$ de coordonnées $x_0,y_0$ dans la matrice bidimensionnelle de l'image J. L'intensité $I_0(x_0,y_0)$ de ce pixel est supposée bruitée au départ.

Pour un pixel courant $P_0(x_0,y_0)$ d'intensité $I_0(x_0,y_0)$ dans l'image J, on définit, dans une fenêtre glissante $WD(x_0,y_0)$ centrée sur ce pixel courant, une série formées d'un nombre N de filtres élémentaires.

Chacun des filtres de la série est un filtre orienté. Par filtre orienté, on entend qu'une dimension de son support est plus grande que l'autre et que cette grande dimension, ou longueur, est parallèle à un axe appelé axe d'orientation, passant par le pixel courant $P_0(x_0,y_0)$, l'autre dimension, ou largeur étant perpendiculaire à cet axe. L'angle formé par l'axe d'orientation avec, par exemple, la direction OX des lignes de la matrice bidimensionnelle de l'image, est appelé angle d'orientation $\Theta$ du filtre élémentaire.

Ainsi, la série des filtres élémentaires liés au pixel courant dans la fenêtre $WD(x_0,y_0)$ comprend plusieurs caractéristiques parmi lesquelles, pour chaque filtre :

- son angle d'orientation $\Theta$,
- l'étendue de son support égale au nombre de pixels parallèlement à l'axe d'orientation multiplié par le nombre de pixels perpendiculairement à cet axe,

    et pour la série de filtres :

- le nombre N des filtres,

Chaque filtre de la série de filtres élémentaires dans la fenêtre $WD(x_0,y_0)$ liée au pixel courant $P_0(x_0,y_0)$, comprend au moins une caractéristique de valeur aléatoire. On peut ainsi définir, dans la fenêtre $WD(x_0,y_0)$ centrée sur le pixel courant $P_0(x_0,y_0)$, une série de N filtres orientés, dont les angles d'orientation $\Theta$ sont aléatoires, les autres caractéristiques étant fixes. On peut aussi définir une série de N filtres orientés, dont à la fois les angles d'orientation $\Theta$ sont aléatoires et les étendues des supports sont aléatoires.

En outre, dans la série, le nombre N de filtres peut être aléatoire.

On décrit ci-après plus précisément les caractéristiques et les propriétés du procédé de filtrage spatial dans lequel on définit différentes séries de tels filtres élémentaires aléatoires.

## II.1/ Procédé de sélection-combinaison

Dans ce procédé appelé de sélection-combinaison, on définit d'abord la structure des filtres élémentaires orientés ayant une ou des caractéristiques aléatoires. Puis on réalise une sélection des pixels à l'intérieur des supports en fonction de leur intensité, pour sélectionner les pixels appartenant potentiellement au même objet que le pixel courant. Ensuite, on effectue une combinaison linéaire ou moyenne des intensités sur chacun des supports des filtres élémentaires, et on combine les résultats de ces moyennes d'intensité, de manière à fournir une intensité résultante, qui est l'intensité filtrée à attribuer au pixel courant.

Dans ce procédé de sélection-combinaison, les supports des filtres incluent le pixel courant $P_0(x_0,y_0)$.

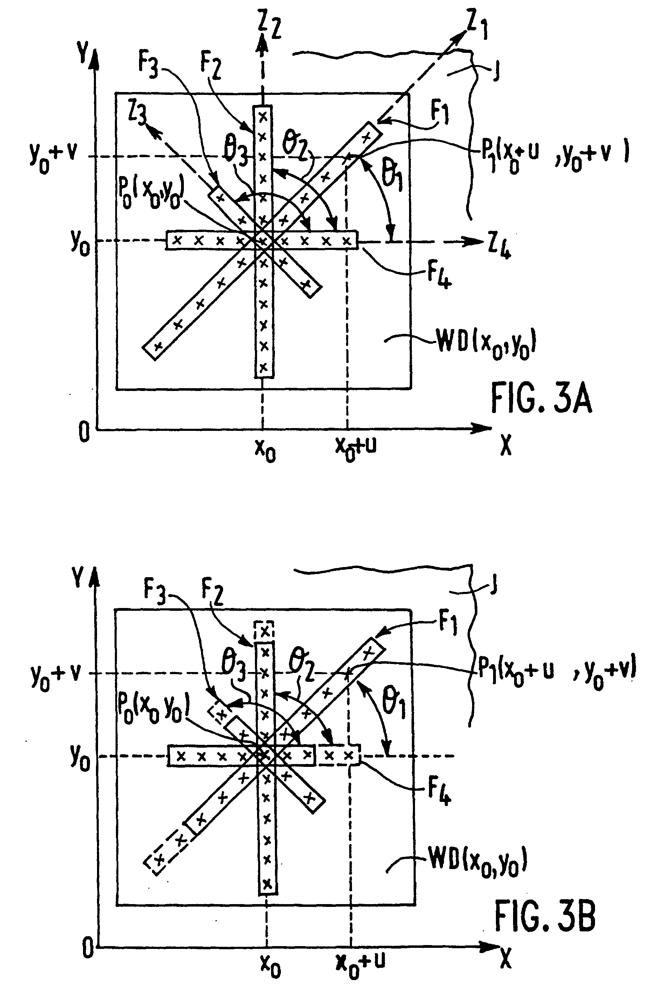

En référence avec la FIG.3A, on a représenté, à titre d'exemple, la définition d'une série de N filtres orientés $F_1$, $F_2$, $F_3$, $F_4$, dont, pour chaque filtre :

    l'angle d'orientation $\Theta_1$, $\Theta_2$, $\Theta_3$, $\Theta_4$ est fixe,
    l'étendue du support est aléatoire,
    les supports de ces filtres sont symétriques par rapport au pixel courant $P_0(x_0,y_0)$,

    et le nombre N de filtres est fixe et égal à 4.

En référence avec la FIG.3B, on a représenté, à titre d'exemple, la définition d'une série de N filtres orientés $F_1$, $F_2$, $F_3$, $F_4$,, dont, pour chaque filtre :

    l'angle d'orientation $\Theta_1$, $\Theta_2$, $\Theta_3$, $\Theta_4$ est aléatoire,
    l'étendue du support est aléatoire,
    les supports sont dissymétriques par rapport au pixel courant $P_0(x_0,y_0)$, et le nombre N de filtres est fixe et égal à 4.

Le nombre N des filtres élémentaires peut également être aléatoire.

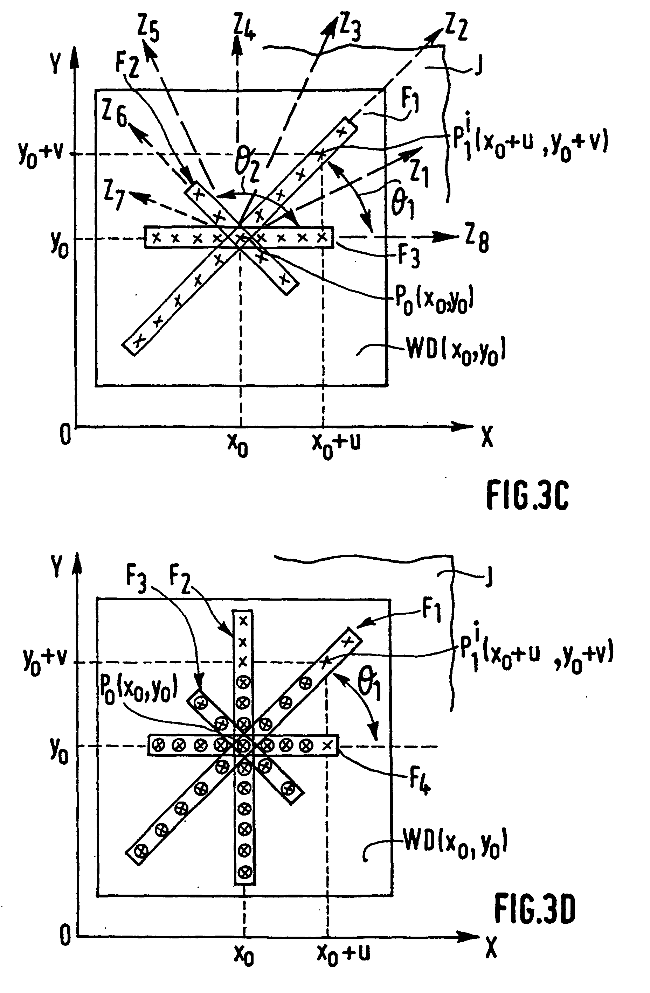

En référence avec la FIG.3C, on a représenté une série de N = 3 filtres élémentaires orientés F1, F2, F3, dont pour chaque filtre :

    l'angle d'orientation $\Theta_1$, $\Theta_2$, $\Theta_3$ est aléatoire,
    l'étendue des supports est aléatoire, et les supports de ces filtres sont symétriques par rapport au pixel courant $P_0(x_0,y_0)$.

En référence avec la FIG.3C, on peut se fixer pour les filtres, un nombre $N_{max}$ d'axes d'orientation potentiels fixes, régulièrement répartis dans l'espace autour de $P_0(x_0,y_0)$. En choisissant un nombre N de filtres inférieur ou égal à $N_{max}$, les filtres se répartissent de manière aléatoire le long des $N_{max}$ axes d'orientation. Par exemple, on peut choisir $N_{max} = 8$ ; dans ce cas, les 8 axes d'orientation $P_0Z_1$, $P_0Z_2$, $P_0Z_3$,... $P_0Z_8$ potentiels possibles sont régulièrement espacées de $\pi/8$ ; et on peut choisir le nombre N de filtres fixe et égal à 3. Ces 3 filtres se répartissent alors de manière aléatoire le long des 8 directions fixes possibles.

Dans un autre exemple, on peut choisir le nombre N de filtres fixe et égal à 4. Ces filtres se répartissant de façon aléatoire sur les 8 axes d'orientation.

Dans ce type d'exemple illustré par la FIG.3C, où des axes d'orientation possibles sont fixés, le nombre N des filtres peut également être aléatoire, en restant inférieur au nombre $N_{max}$ d'axes d'orientation.

Dans chacune des FIG.3A et 3B, l'étendue des supports des filtres est de 1 x K pixels, où K est le nombre de pixels dans le support, ce nombre K étant aléatoire dans chacun de ces deux exemples. Les filtres représentés à titre d'exemple ont donc des supports monodimensionnels. Dans d'autres exemples non représentés, les supports des filtres peuvent être bidimensionnels à condition qu'une des dimensions soit au moins double de l'autre dimension, cette dernière étant petite, par exemple 2 ou 3 pixels. De préférence, la fenêtre $WD(x_0,y_0)$ est choisie de l'ordre de 20 x 20 pixels, ce qui fixe la grande dimension des filtres à au plus 20 pixels dans ce cas.

Parmi les caractéristiques aléatoires potentiellement utilisables dans la définition de la série des N filtres élémentaires orientés pour atteindre aux buts de l'invention, c'est-à-dire pour réaliser un filtrage spatial du bruit sans génération de TACHES (PATCHES) et sans détérioration des détails, contours et contraste, on propose dans l'ordre décroissant d'importance :

1) Les support des N filtres $F_1$ à $F_N$ sont d'étendue aléatoire par exemple avec les orientations $\Theta_1$ à $\Theta_N$ fixes et les autres caractéristiques fixes, comme illustré par la FIG.3A ;

2) les supports des N filtres $F_1$ à $F_N$ sont d'étendue et d'orientation $\Theta_1$ à $\Theta_2$ aléatoires, les autres caractéristiques étant fixes, comme illustré par la FIG. 3B ;

3) les supports des N filtres $F_1$ à $F_N$ sont d'étendue et d'orientation $\Theta_1$ à $\Theta_N$ aléatoire, et en outre le nombre N des filtres est aléatoire, comme illustré par la FIG.3C ;

4) les supports sont en outre asymétriques, comme illustré par la FIG.3B ;

5) un sous-échantillonnage dans la fenêtre $WD(x_0, y_0)$ peut être effectué préalablement au traitement de chaque pixel et le pixel de départ du sous-échantillonnage peut être aléatoire ;

6) la moyenne MEAN pour obtenir soit les résultats individuels $R_1$, $R_2$, $R_N$ des filtres, soit le résultat général R peut s'appliquer sur des intensités pondérées par des poids aléatoires ; à cet effet, on définit un coefficient aléatoire C lié au support, égal à l'inverse de la somme des poids, compris entre 0 et 1, affectés à chaque pixel dans le support ; chacun de ces poids peut être égal à 1 ; dans ce cas le coefficient est égal à l'inverse 1/K du nombre K de pixels contenus dans le support ; le coefficient C de chaque filtre est pris en compte pour effectuer la combinaison linéaire pondérée des intensités.

Par exemple le résultat $R_1$ peut être obtenu en appliquant sur les différentes intensité $I_1 (x_0+u, y_0+v)$ du filtre F1 des poids $W_1$ aléatoires et en faisant la moyenne MEAN de ces intensités pondérées, d'où il résulte :

$$R_1 = C \times \Sigma \, [W_1(u,v) \times I_1(x_0+u, y_0+v)]$$

Toutes les caractéristiques citées plus haut peuvent être rendues aléatoires, seules ou en combinaison, en sachant néanmoins que les caractéristiques les plus importantes sont, pour les supports de filtres l'étendue aléatoire et l'orientation aléatoire et pour la combinaison le nombre de filtres N aléatoire.

Exemple I : Le procédé de sélection-combinaison SIG-MEAN-MEAN

Ce premier procédé de SELECTION-COMBINAISON est désigné ci-après par le terme SIG-MEAN-MEAN pour simplifier l'écriture.

Ce procédé comprend d'abord, comme décrit ci-dessus, la définition des filtres orientés avec :

- leurs caractéristiques aléatoires,
- leurs caractéristiques fixes,
- leur nombre fixe ou aléatoire.

Ce procédé comprend ensuite la SELECTION dans chaque support de filtre d'un certain nombre de pixels en fonction de leur différence d'intensité vis-à-vis de l'intensité du pixel courant.

Ce procédé comprend ensuite la combinaison des filtres.

En posant que le pixel courant $P_0$ a pour coordonnées $(x_0,y_0)$ dans la matrice bidimensionnelle de l'image J, et que le pixel P que l'on examine a pour coordonnées $(x_0+u, y_0+v)$, où u et v sont des nombres entiers, la SELECTION est effectuée pour tout pixel P ayant une intensité $I(x_0+u, y_0+v)$ telle que :

$$\left| I(x_0+u, y_0+v) - I_0(x_0,y_0) \right| < m \times \sigma_B \qquad (1)$$

où m est un facteur multiplicatif et où $\sigma_B$ est l'écart type du bruit dans l'image (noise standard déviation, en anglais).

L'écart type du bruit dans l'image peut être estimé par toute méthode connue de l'état de la technique, ou bien peut être estimé à priori. L'écart type du bruit est mesuré en niveaux de gris (ou intensité). Il peut être par exemple 5 ou 10 niveaux de gris. Il est indispensable de réaliser uné estimation de l'écart type du bruit $\sigma_B$ pour mener à bien le procédé selon l'invention.

On rappelle ci-après la définition de l'écart type du bruit telle que connue de l'homme du métier.

L'écart type du bruit noté $\sigma_B$ est l'écart moyen que fait le bruit par rapport à sa moyenne. L'écart type du bruit est la racine carrée de la variance $\sigma_B^2$ du bruit dans l'image. L'écart type du bruit peut être obtenu en appliquant la méthode fournie ci-après à titre d'exemple.

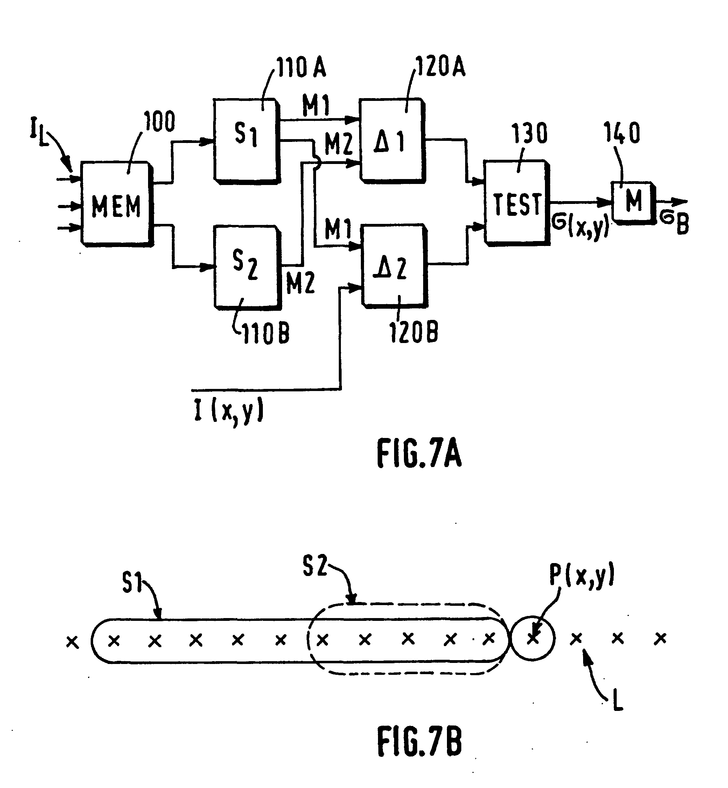

En référence avec le diagramme de blocs de la FIG.7A, cette méthode comprend d'abord le traitement de l'image J par ligne, pixel par pixel, selon un balayage qui peut être un balayage standard, depuis en haut à gauche de l'image jusqu'à en bas à droite de l'image. Dans une première étape symbolisée par le bloc MEM 100, les intensités I(x,y) des pixels sont mémorisées en fonction de leurs coordonnées (x,y) dans la matrice bidimensionnelle de l'image.

Dans une seconde étape symbolisée par les blocs 110A et 110B, et illustrée par la FIG.7B, en chaque pixel courant P(x,y) de coordonnées x,y d'une ligne L de pixels dans l'image J, on calcule deux moyennes des intensités des pixels situés à gauche du pixel courant, si le sens de balayage de la ligne est vers la droite :

une première moyenne M1 des intensités sur un grand support $S_1$, calcul symbolisé par le bloc 110A, c'est-à-dire une moyenne des intensités d'un grand nombre de pixels de la ligne situés à gauche du pixel courant, ces pixels ayant déjà été balayés ; par grand support, on entend environ 10 pixels.
une seconde moyenne $M_2$ des intensités sur un petit support $S_2$, calcul symbolisé par le bloc 110B, c'est-à-dire une moyenne des intensités d'un plus petit nombre de pixels que celui du grand support, par exemple la moitié, soit 5 pixels, et à gauche du pixel courant O(x,y) sur la ligne.

Ces première et seconde moyennes d'intensités $M_1$, $M_2$ peuvent être exactes ou pondérées, comme connu de l'homme du métier. Par pondérées, on entend qu'on affecte, à chaque intensité des pixels dont on fait la moyenne, un poids compris entre 0 et 1.

Dans une troisième étape symbolisée par le bloc 120A, la méthode de détermination de l'écart type du bruit $\sigma_B$, comprend ensuite le calcul d'une valeur $\Delta 1$ égale à la valeur absolue de la différence entre la première moyenne d'intensité $M_1$ sur un grand support et la seconde moyenne d'intensité $M_2$ sur un petit support. L'évaluation de cette différence :

$$\Delta_1 = |M_1 - M_2|$$

permet de rejeter les intervalles de pixels, sur la ligne traitée qui contiennent des bords d'objet, c'est-à-dire dans lesquels apparaît une brusque variation d'intensité due aux contours d'un objet : on déclare qu'il y a un bord d'objet dans l'intervalle de pixels constitué par le grand support $S_1$, lorsque la seconde moyenne d'intensité $M_2$

sur le petit support est très différente de la première moyenne $M_1$ d'intensité sur le grand support ; c'est-à-dire quand la différence $\Delta_1$ calculée entre ces deux moyennes d'intensité excède une valeur estimée en niveaux de gris égale à environ 10 % des niveaux de gris utilisés pour construire l'image J numérique ; et, si un bord est détecté, on rejette l'intervalle constitué par les pixels du grand support S1.

Dans une quatrième étape symbolisée par le bloc 120B, cette méthode de détermination de l'écart type comprend en outre le calcul d'une valeur $\Delta_2$ égale à la valeur absolue de la différence entre la première moyenne d'intensité sur le grand support et l'intensité du pixel courant I(x,y)

$$\Delta_2 = |M_1 - I(x,y)|$$

L'évaluation de cette différence permet de rejeter les pixels aberrants. On déclare que le pixel courant a une intensité aberrante lorsque la différence d'intensité $\Delta_2$ entre l'intensité du pixel courant I(x,y) et la première moyenne d'intensité $M_1$ sur un grand support $S_1$ dépasse une valeur estimée en niveaux de gris comme définie plus haut, environ 10 % des niveaux de gris de l'image J.

Dans une étape ultérieure symbolisée par le bloc de TEST 130, cette méthode comprend l'examen des deux conditions précédentes :

si le pixel courant n'a pas une intensité aberrante,
si l'intervalle de pixels correspondant au grand support ne contient pas de bord d'objet.

Dans le cas où ces deux conditions sont conjointement réalisées, alors on déclare que $\Delta_2$ qui est la valeur absolue de la différence d'intensité entre le pixel courant I(x,y) et la première moyenne $M_1$ d'intensité sur le grand support $S_1$, est une mesure élémentaire $\sigma(x,y)$ retenue pour l'évaluation de l'écart type du bruit.

La suite des opérations décrites ci-dessus est répétée pour tous les pixels à traiter de l'image J. Puis une moyenne générale M de toutes les mesures élémentaires est effectuée dans le bloc 140 et est retenue comme valeur de l'écart type du bruit $\sigma_B$.

Dans la relation (1), le facteur m multiplicatif de l'écart type du bruit $\sigma_B$ peut être égal à 2 ou 3. Dans le cas où le bruit est gaussien et où un filtre élémentaire est appliqué sur une zone de l'image où l'intensité est sensiblement uniforme, si m = 2, alors environ 3/4 des pixels sont sélectionnés, et si m = 3 alors pratiquement tous les pixels sont sélectionnés.

On examine alors, en appliquant la relation (1), tous les pixels situés à l'intérieur de chaque support du filtre élémentaire orienté.

L'opération de SELECTION décrite ci-dessus, qui prend en compte l'écart type du bruit $\sigma_B$ (lire SIGMA B) pour sélectionner des pixels d'intensité proche de celle du pixel courant, est désignée ci-après par le terme SIG pour simplifier l'écriture.

En référence avec la FIG.3D, on a montré dans une image J, une fenêtre $WD(x_0,y_0)$ centrée sur le pixel courant $P_0(x_0,y_0)$, des supports de filtres $F_1$, $F_2$, $F_3$, $F_4$, monodimensionnels orientés dans diverses directions du plan de l'image, autour du pixel courant $P_0(x_0,y_0)$, et on a mis en relief les pixels sélectionnés par SIG en les entourant d'un cercle.

A l'issue de l'opération de SELECTION SIG, une combinaison linéaire ou moyenne des intensités des pixels sélectionnés est effectuée. Cette opération de moyennage est désignée ci-après par le terme MEAN.

En référence avec la FIG.4A qui est un diagramme du filtrage par SELECTION-COMBINAISON SIG-MEAN-MEAN d'une série de filtres telle qu'illustrée par la FIG.3D, le filtre $F_1$ effectue la sélection des pixels symbolisées par le bloc SIG 10.1, et calcule dans le bloc MEAN 11.1 une première moyenne $R_1$ des diverses intensités $I_1^i (x_0+u, y_0+v)$ des pixels sélectionnés dans $F_1$ avec :

$$R_1 = MEAN [I_1^i(x_0+u, y_0+v)]$$

tel que

$$\left| I_1^i(x_0+u, y_0+v) - I_0(x_0,y_0) \right| < k \times \sigma_B \qquad (1)$$

$(x_0+u, y_0+v)$ décrivant le support orienté du filtre $F_1$.

Puis, le filtre $F_2$ calcule dans le bloc MEAN 11.2 une seconde moyenne $R_2$ des diverses intensités $I_2^i (x_0+u, y_0+v)$ des pixels sélectionnés dans un bloc SIG 10.2 avec :

$$R_2 = MEAN [I_2^i(x_0+u, y_0+v)]$$

où l'intensité des pixels sélectionnés obéit à la relation (1), $(x_0+u, y_0+v)$ décrivant le support orienté du filtre $F_2$.

On opère de même jusqu'au filtre $F_N$ compris (SIG 10.N, MEAN 11.N) :

$$R_N = MEAN [I_N^i(x_0+u, y_0+v)]$$

où les diverses intensités $I_N^i(x_0+u, y_0+v)$ des pixels sélectionnés obéissent à la relation (1), $(x_0+u, y_0+v)$ décrivant le support orienté du filtre $F_N$.

Lorsque toutes les moyennes $R_1$ à $R_N$ ont été obtenues par les filtres orientés $F_1$ à $F_N$, une moyenne MEAN est effectuée dans MEAN 12 sur lesdites moyennes $R_1$ à $R_N$, ce qui fournit l'intensité filtrée $R_0(x_0,y_0)$ résultante à appliquer finalement au pixel courant $P_0(x_0, y_0)$

$$R_0(x_0,y_0) = MEAN [R_1, R_2... R_N]$$

## Exemple II : Le procédé de sélection combinaison SIG-MEAN-MED

Ce second procédé de sélection-combinaison est désigné ci-après pour la simplicité d'écriture par le terme SIG-MEAN-MED. A l'issue de l'opération de définition de la série de N filtres élémentaires orientés avec :

- leurs caractéristiques aléatoires,
- leurs caractéristiques fixes,
- leur nombre fixe ou aléatoire, l'opération de sélection des pixels dans chaque support de filtre est effectuée comme dans l'exemple I par le critère (1) portant sur l'intensité des pixels et prenant en compte l'écart type du bruit $\sigma_B$.

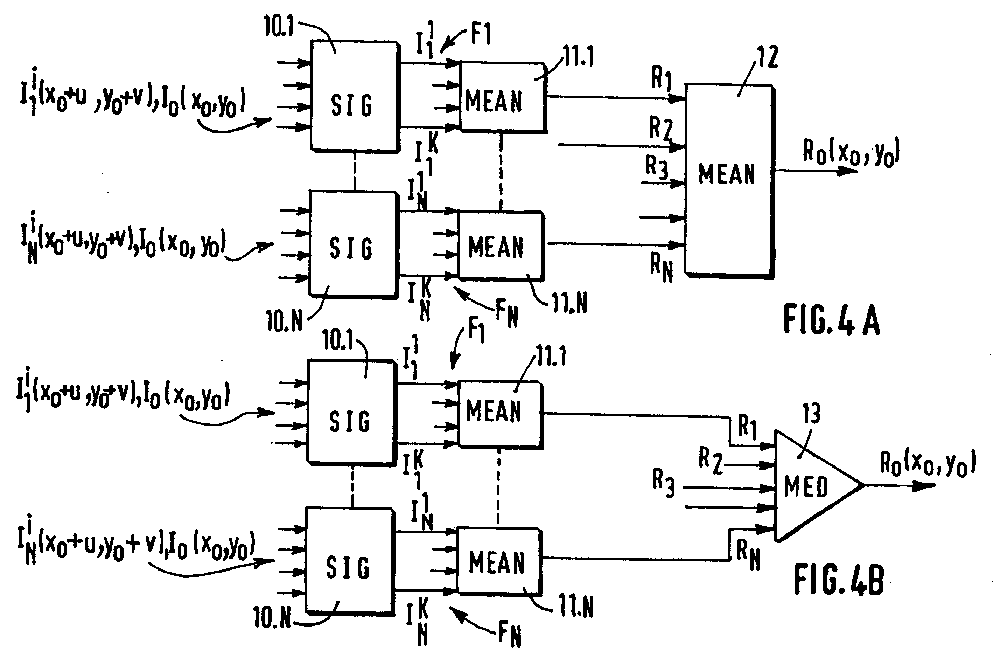

Ensuite, en référence avec la FIG.4B, l'obtention des résultats $R_1$ à $R_N$ particuliers des filtres $F_1$ à $F_N$ est effectuée par un moyennage MEAN sur les diverses intensités respectives $I_1^i(x_0+u, y_0+v)$ à $I_N^i(x_0+u, y_0+v)$ des filtres $F_1$ à $F_N$, puis les intensités $R_1$ à $R_N$ résultant de ces moyennages sont combinées par un filtre médian désigné par MED 13, qui fournit l'intensité résultante $R_0(x_0,y_0)$ telle que :

$$R_0(x_0,y_0) = MED [R_1, R_2... R_N]$$

Un filtre médian est un filtre qui effectue le classement des intensités qui lui sont présentées, avec un numéro d'ordre, de la plus petite à la plus grande intensité, et qui fournit comme résultat, l'intensité dont la valeur est celle du numéro situé au milieu de l'ensemble des numéros, ou si les numéros ne sont pas impairs, la moyenne d'intensité correspondant aux deux numéros du centre.

L'avantage de la méthode SIG-MEAN-MED est que le filtre médian utilisé a des propriétés d'injection du bruit haute fréquence qui le rendent spécialement intéressant pour éviter l'effet de TACHES (PATCHES) dans l'image. En effet le filtre médian effectue la sélection d'un des résultats, entre R1 et RN qui est la valeur située au milieu de ces valeurs d'intensité, au lieu d'une moyenne de ces intensités. Le résultat $R_0(x_0,y_0)$ qui est obtenu avec le MEDIAN est une intensité plus fortement décorrélée, d'un pixel courant traité, au pixel courant suivant traités, que l'intensité résultant de la moyenne MEAN 12 utilisée dans l'exemple I décrit précédemment.

## Exemple III : Le procédé de sélection combinaison KNN

Ce troisième procédé de sélection combinaison est désigné ci-après, pour la simplicité d'écriture par le terme KNN.

Dans cet exemple, une autre méthode de SELECTION en fonction de l'intensité est appliquée au lieu du critère (1) qui tient compte de l'écart type du bruit $\sigma_B$. Cette autre méthode de sélection consiste à retenir tous les pixels dont l'intensité diffère le moins de celle du pixel courant. A cet effet, on calcule les différences d'intensité

$$\Delta(x_0,y_0) = |I(x_0+u, \, y_0+v) - I_0(x_0,y_0)| \qquad (2)$$

entre les pixels dans chacun des filtres et l'intensité du pixel courant.

Dans cette méthode appelée des K PLUS PROCHES VOISINS et désignée par le terme KNN, on sélectionne en fait un nombre fixe K de pixels ayant l'intensité la plus proche de celle du pixel courant.

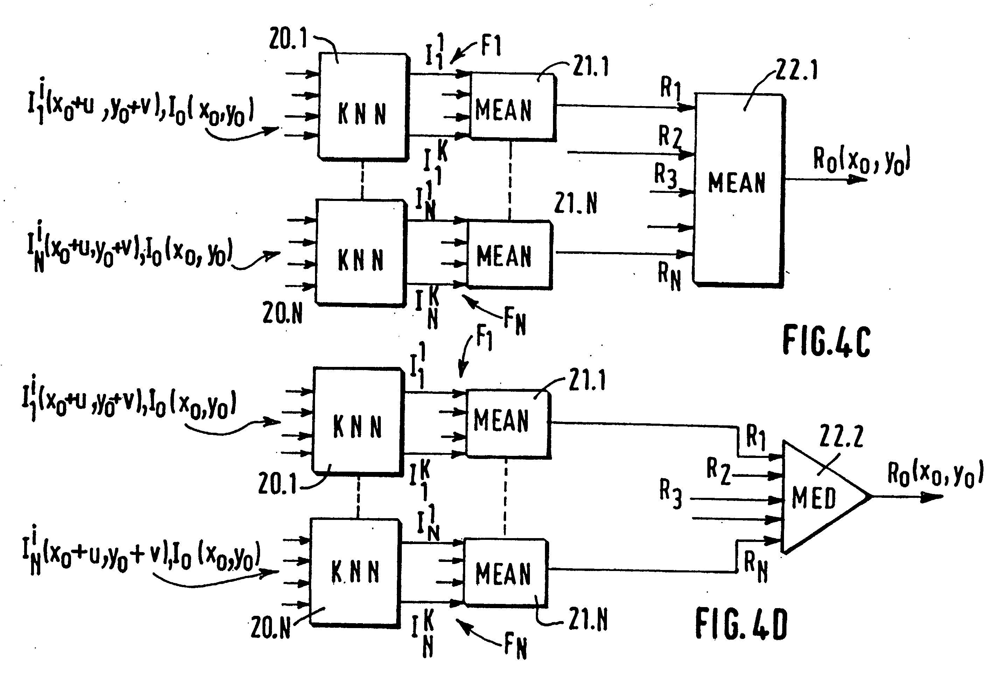

Toutes les autres caractéristiques et étapes du procédé KNN peuvent être identiques à celles de l'exemple I ou l'exemple II, et sont illustrées à cet effet par les FIG.4C et 4D.

Dans ces FIGS, les blocs KNN 20.1 à KNN 20.N symbolisent les étapes de sélection des pixels, et les blocs MEAN 21.1 à MEAN 21.N symbolisent la réalisation des moyennes d'intensité des pixels sélectionnés sur les filtres.

Les blocs MEAN 22.1, et MED 22.2. effectuent respectivement une moyenne ou un filtrage médian des résultats particuliers des filtres élémentaires pour fournir le résultat final $R_0(x_0,y_0)$.

### II.2/ Le procédé FMH

Dans les étapes du procédé décrit ci-après on définit une série de N filtres linéaires élémentaires moyenneurs, à réponse impulsionnelle, dont les réponses sont en outre combinées par des filtres médians, ce qui revient à désigner cette classe de filtres par FMH (en anglais : FIR HYBRID MEDIAN FILTERS). Cette combinaison a une structure d'arbre qui comprend les filtres linéaires moyenneurs (FIR) et les filtres médians (MED).

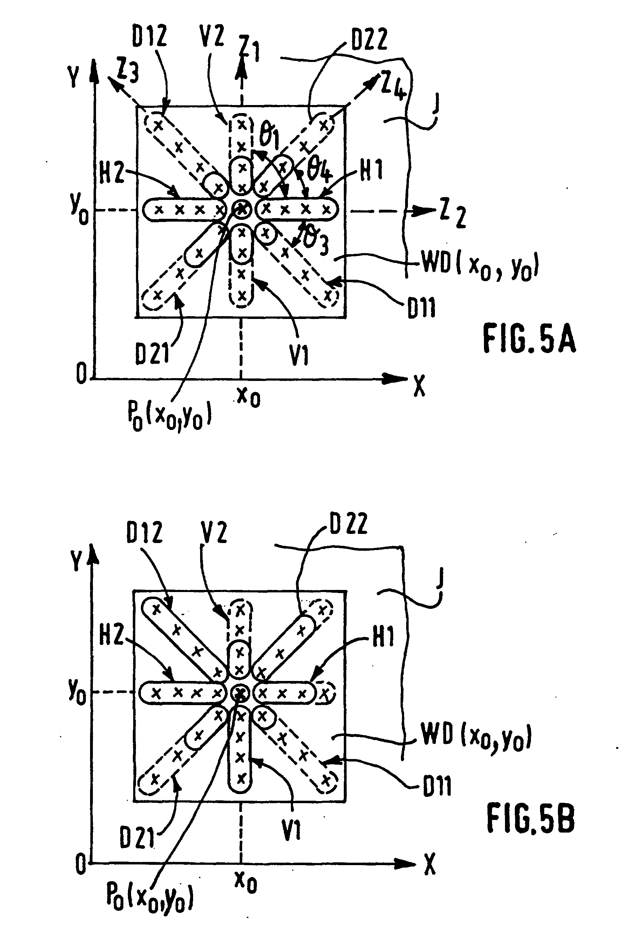

En référence avec les FIG.5A à 5D, on définit une fenêtre WD($x_0,y_0$) bidimensionnelle, centrée sur le pixel courant $P_0(x_0,y_0)$ de coordonnées ($x_0,y_0$) dans la matrice bidimensionnelle de l'image J à traiter. Dans cette fenêtre WD($x_0,y_0$), on définit des supports de filtres selon les lignes des pixels, et les colonnes de pixels, et les deux diagonales entre les lignes et les colonnes. Le pixel central $P_0(x_0,y_0)$ de la fenêtre WD($x_0,y_0$), qui est le pixel courant, est considéré à part.

En référence avec la FIG.5A, on a représenté à titre d'exemple une série de N filtres orientés $H_1$, $H_2$, $V_1$, $V_2$, $D_{11}$, $D_{12}$, $D_{21}$, $D_{22}$ dont pour chaque filtre :

- l'orientation est fixe considérée par exemple par rapport à l'axe OX, selon la verticale $\Theta_1$, l'horizontale $\Theta_2$ (angle non représenté) et les diagonales $\Theta_3$, $\Theta_4$ passant par le pixel courant, centre du carré formant la fenêtre,

- l'étendue du support est aléatoire : ces supports sont monodimensionnels, c'est-à-dire ont une largeur de 1 pixel et une longueur qui est limitée par le cadre de la fenêtre WD ($x_0,y_0$),
- les supports des filtres $H_1$, $H_2$ disposés selon la même direction, par exemple horizontale, sont symétriques. Il en est de même des supports de filtres $V_1$ et $V_2$ disposés selon la direction verticale, des supports de filtres $D_{11}$ et $D_{12}$ disposés selon la première diagonale, des supports de filtres $D_{12}$, $D_{22}$ disposés selon la seconde diagonale,
- le nombre N des filtres est fixe ; ici ce nombre est 8, et ces supports de filtres sont disposés selon tous les angles possibles d'orientation $\Theta_1$ à $\Theta_4$ multiples de $\pi/4$ dans l'espace,
- dans la série de filtres, on incorpore le pixel central $P_0(x_0,y_0)$ de la fenêtre et son intensité est considérée à part.

En référence avec la FIG.5B, une série de filtres du même type est représentée avec les caractéristiques suivantes, par rapport à la FIG.5A :

- les supports des filtres qui sont disposés selon la même direction sont dissymétriques de manière aléatoire.

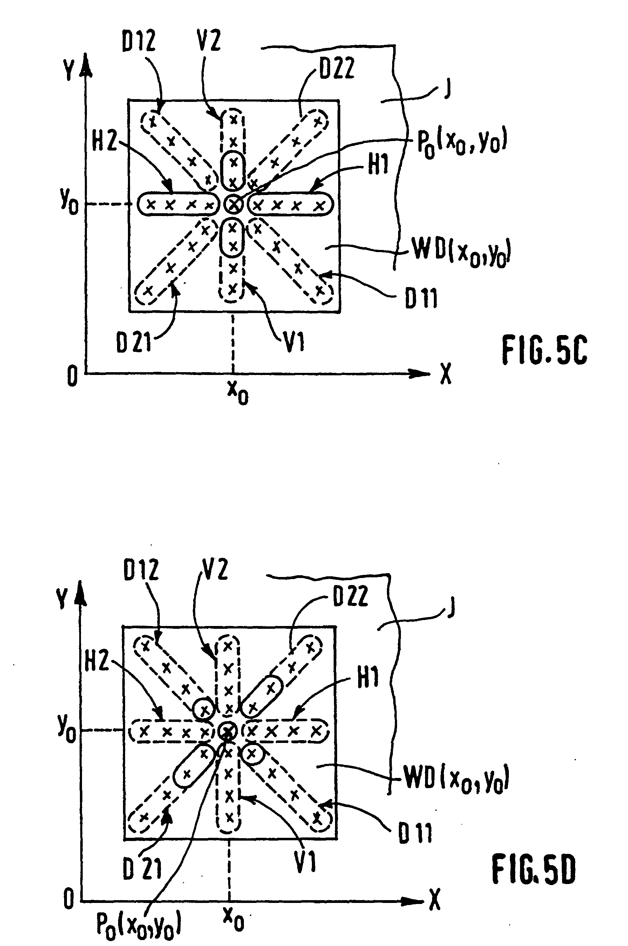

En référence avec les FIG.5C et 5D, au lieu de considérer un nombre de filtres disposés selon tous les angles potentiels d'orientation $\Theta_1$, $\Theta_2$, $\Theta_3$, $\Theta_4$, seulement deux axes sont considérées : les axes horizontal et vertical, sur la FIG.5C ; les axes formés par les directions des deux diagonales sur la FIG.5D. D'où, sur la FIG.5C, la série de filtres comprend seulement les supports $H_1$, $H_2$, $V_1$, $V_2$ alignés sur ces axes horizontal et vertical ; et sur la FIG.5D, la série de filtres comprend seulement les supports $D_{11}$, $D_{12}$, $D_{21}$ et $D_{22}$ alignés sur ces axes en diagonale. Sur ces FIG.5C et 5D à titre d'exemple, les supports ont une étendue aléatoire et sont symétriques par rapport au pixel courant.

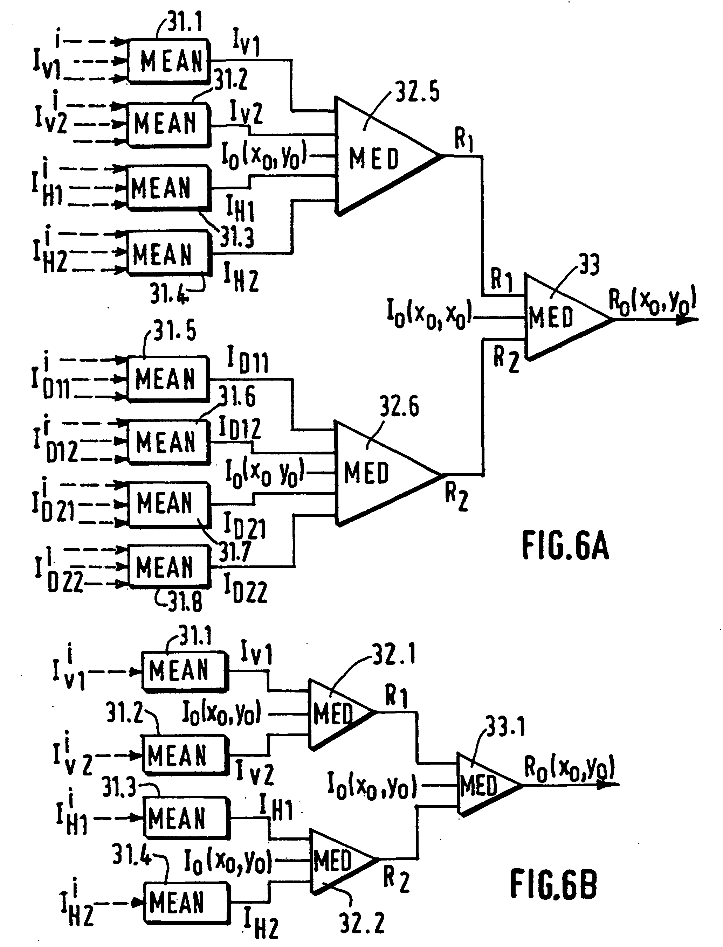

En référence avec les FIG.6A à 6C, les filtres ayant les supports de caractéristiques aléatoires décrits en relation avec les FIG.5A à 5D effectuent d'abord la combinaison linéaire ou moyenne MEAN des intensités des pixels sur leur support.

On a appelé $I^i_{V1}$, $I^i_{V2}$, $I^i_{H1}$, $I^i_{H2}$ les différentes intensités des pixels situés sur les supports $V_1$, $V_2$, $H_1$ et $H_2$ respectivement.

On a appelé $I^i_{D11}$, $I^i_{D12}$, $I^i_{D21}$, $I^i_{D22}$ les différentes intensités des pixels situés sur les supports D11, D12, D21, D22 respectivement.

Les résultats des moyennes effectuées, dans les blocs MEAN31.1 à MEAN 31.8, par les filtres $H_1$, $H_2$, $V_1$, $V_2$, $D_{11}$, $D_{12}$, $D_{21}$, $D_{22}$ sont des intensités notées $I_{H1}$,

$I_{H2}$, $I_{V1}$, $I_{V2}$, $I_{D11}$, $I_{D12}$, $I_{D21}$ et $I_{D22}$ respectivement.

En référence avec la FIG.6A, la combinaison en arbre des résultats des filtres moyenneurs MEAN précédents comprend 2 niveaux incluant l'introduction dans un filtre médian MED 32.5 à 5 valeurs, des intensités moyennes $I_{V1}$, $I_{V2}$, $I_{H1}$, $I_{H2}$ sur les axes horizontal et vertical plus l'intensité de $I_0$ $(x_0, y_0)$ du pixel central ; et en parallèle, l'introduction dans un filtre médian MED 32.6 à 5 valeurs, des intensités moyennes $I_{D11}$, $I_{D12}$, $I_{D21}$, $I_{D22}$ sur les deux directions diagonales plus l'intensité $I_0(x_0, y_0)$ du pixel central. Ces deux filtres médians fournissent respectivement les intensités résultantes R1 et R2, terminant le premier niveau de l'arbre.

Les deux intensités R1 et R2 calculées au premier niveau de l'arbre sont introduites, avec l'intensité $I_0(x_0, y_0)$ du pixel central dans un nouveau filtre médian MED 33, à 3 valeurs, qui fournit l'intensité résultante $R_0$ $(x_0, y_0)$ à appliquer comme valeur d'intensité filtrée sur le pixel courant $P_0$ $(x_0, y_0)$.

En référence avec la FIG.6B, la combinaison comprend également 2 niveaux, mais elle n'est appliquée que sur les moyennes d'intensité $I_{V1}$, $I_{V2}$, $I_{H1}$, $I_{H2}$ relatives aux seules directions verticales et horizontales respectivement. Cette combinaison comprend l'introduction des moyennes d'intensité $I_{V1}$, $I_{V2}$ plus l'intensité $I_0(x_0, y_0)$ bruitée du pixel central dans un filtre médian MED 32.1 a 3 valeurs pour fournir une intensité résultante R1 ; et l'introduction des moyennes d'intensité $I_{H1}$, $I_{H2}$ en parallèle dans un filtre médian MED 32.2 a 3 valeurs pour fournir une intensité résultante R2.

Les intensités R1 et R2 calculées au premier niveau de l'arbre sont introduites, avec l'intensité $I_0(x_0, y_0)$ du pixel central dans un nouveau filtre médian MED 33.1, à 3 valeurs, qui fournit l'intensité résultante $R_0(x_0, y_0)$ à appliquer comme valeur d'intensité filtrée sur le pixel courant $P_0$ $(x_0, y_0)$.

On peut, dans une combinaison non représentée, remplacer les valeurs de moyennes d'intensité $I_{V1}$, $I_{V2}$, $I_{H1}$, $I_{H2}$ dans la FIG.6B par les moyennes obtenues dans les mêmes conditions sur les deux diagonales, soit respectivement $I_{D11}$, $I_{D12}$, $I_{D21}$, $I_{D22}$, pour former une autre combinaison de filtres à deux niveaux sur seulement deux axes qui sont celles des deux diagonales.

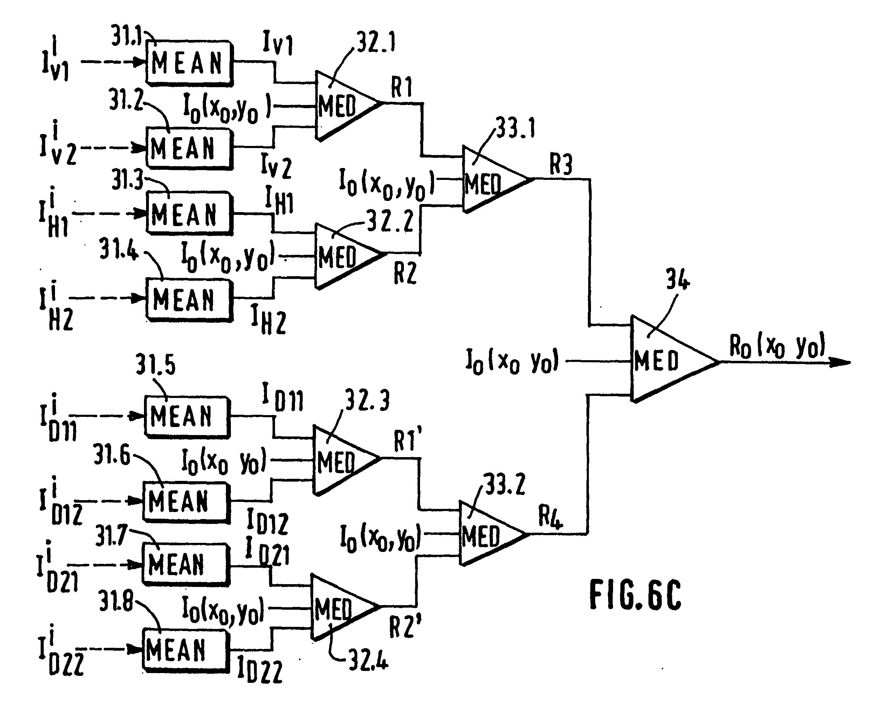

En référence avec la FIG.6C, la combinaison en arbre comprend 3 niveaux. Les deux premiers niveaux sont constitués comme décrit en relation avec la FIG.6B de la combinaison des filtres sur les deux axes horizontal et vertical et donne par MED 33.1 un résultat R3 ; et en parallèle comme décrit plus haut, de la combinaison des filtres sur les deux axes diagonaux et donne par MED 33.2 un résultat R4.

Le premier résultat $R_3$ et le second résultat $R_4$ sont ensuite combinés avec l'intensité bruitée $I_0$ $(x_0, y_0)$ du pixel courant, dans un filtre médian MED 34 à 3 valeurs, pour donner en sortie de ce troisième niveau, l'intensité résultante $R_0(x_0, y_0)$ à appliquer comme valeur d'intensité filtrée sur le pixel courant $P_0$ $(x_0, y_0)$.

L'intensité d'un pixel courant est filtrée par la série de filtres élémentaires aléatoires préalablement définis, selon les étapes de sélection et de combinaison proposées, puis les intensités des autres pixels désirés de l'image sont filtrées, jusqu'à ce que tous les pixels désirés de l'image aient subi le traitement selon le procédé proposé, c'est-à-dire, en opérant le filtrage de l'intensité de chaque pixel désiré par une série de filtres élémentaires dont les caractéristiques qui sont fixes ou qui sont aléatoires ont été préalablement définies, ainsi que le mode de réalisation des combinaisons d'intensité.

## Revendications

1. Procédé de filtrage spatial du bruit dans une image (J) ayant la forme d'une matrice bidimensionnelle de pixels $[P(x,y)]$ ayant des valeurs d'intensité $[I(x, y)]$ numérisées bruitées, ce procédé comprenant des étapes de :

   a) sélection, dans une fenêtre glissante $[WD(x_0, y_0)]$ centrée sur un pixel courant $[Po(x_0, y_0)]$ d'un nombre ($N \neq 0$) de filtres élémentaires $[F_1, F_2,... F_N ; V_1, V_2, H_1, H_2, D_{11}, D_{12}, D_{21}, D_{22}]$ orientés aléatoires ayant des supports avec un axe d'orientation $[P_0Z_1, P_0Z_2,..., P_0Z_N]$ passant par le pixel courant et des caractéristiques dont une ou plusieurs ont des valeurs aléatoires,

   b) combinaison des intensités des pixels sur lesdits supports individuellement, fournissant une intensité élémentaire, et combinaison des intensités élémentaires, fournissant une intensité filtrée $[Ro(x_0, y_0)]$ à appliquer au pixel courant.

2. Procédé selon la revendication 1, selon lequel les supports des filtres ont potentiellement, parmi les caractéristiques dont une ou plusieurs ont des valeurs aléatoires :

   leur nombre (N) dans la série,
   un angle d'orientation $[\Theta_1, \Theta_2,... \Theta_N]$ entre l'axe d'orientation $[P_0Z_1, P_0Z_2,..., P_0Z_N]$ et un axe de référence (OX) défini dans la matrice bidirectionnelle,
   une étendue définie en nombre de pixels dont la plus grande dimension est parallèle à l'axe d'orientation,
   une asymétrie par rapport au pixel courant,
   un coefficient lié à des coefficients de pondération appliqués aux intensités des pixels.

3. Procédé selon l'une des revendications 1 ou 2, selon lequel un sous-échantillonnage des pixels de la fenêtre est potentiellement pratiqué avec un pixel de départ de ce sous-échantillonnage localisé de manière aléatoire.

**4.** Procédé selon l'une des revendications 1 à 3, selon lequel lesdits supports de filtre sont monodimensionnels avec les pixels alignés sur les axes d'orientation, où sont bidimensionnels avec la dimension du support parallèle à l'axe d'orientation au moins double de la dimension transverse.

**5.** Procédé selon l'une des revendications 1 à 4, selon lequel :

les angles d'orientation potentiels [$\Theta_1$, $\Theta_2$,... $\Theta_N$] sont fixes et régulièrement répartis dans l'espace,
le nombre (N), fixe ou aléatoire, des filtres élémentaires aléatoires est inférieur ou égal au nombre ($N_{max}$) des angles d'orientation,
et les axes d'orientation des supports de ces filtres élémentaires sont disposés selon ces angles d'orientation de manière fixe ou aléatoire.

**6.** Procédé selon la revendication 5, selon lequel :

les supports des filtres élémentaires aléatoires incluent le pixel courant,

ce procédé comprenant en outre, entre l'étape a) et l'étape b), une étape de :

a') sélection (SIG, KNN) des pixels en fonction de leur intensité sur chaque support de filtre élémentaire, selon un critère qui retient les pixels d'intensité proche de celle du pixel courant pour estimer leur appartenance à un même objet de l'image.

**7.** Procédé selon la revendication 6, selon lequel, pour la sélection des pixels, le critère retient les pixels qui ont une intensité [$I(x_0+u, y_0+v)$] telle que la valeur absolue de la différence entre ladite intensité et l'intensité [$I_0(x_0, y_0)$] du pixel courant est inférieure à un multiple (m) de l'écart type du bruit ($\sigma_B$) dans l'image (J).

**8.** Procédé selon la revendication 6, selon lequel :

pour la sélection des pixels, le critère retient les pixels en un nombre prédéterminé (K) dans le support.

**9.** Procédé selon l'une des revendications 7 ou 8, selon lequel la combinaison des intensités des pixels sur les supports est linéaire et la combinaison des intensités élémentaires est effectuée par un filtre moyenneur (MEAN).

**10.** Procédé selon l'une des revendications 7 ou 8, selon lequel la combinaison des intensités des pixels sur les supports est linéaire et la combinaison des intensités élémentaires est effectuée par un filtre médian (MED).

**11.** Procédé selon la revendication 5, selon lequel :

les axes d'orientation fixes sont au nombre de quatre, disposés selon la ligne, la colonne, et les deux diagonales passant par le pixel courant, dans la fenêtre,
les supports sont positionnés pour exclure le pixel courant, étant disposés de part et d'autre du pixel courant, sur la ligne ($H_1$, $H_2$), sur la colonne ($V_1$, $V_2$), sur la première diagonale ($D_{11}$, $D_{12}$) et sur la seconde diagonale ($D_{21}$, $D_{22}$) passant par le pixel courant,
le pixel courant, central dans la fenêtre [$W_D (x_0, y_0)$], est considéré comme un support particulier,

et la combinaison des intensités élémentaires prend en compte l'intensité du pixel courant.

**12.** Procédé selon la revendication 11, selon lequel la combinaison des intensités des pixels sur les supports est linéaire, et la combinaison des intensités élémentaires est effectuée par des filtres médians sur deux ou trois niveaux, prenant en compte l'intensité du pixel courant.

**13.** Procédé selon l'une des revendications 1 à 12, selon lequel les étapes définies pour un pixel à traiter sont répétées pour tous les pixels à traiter dans l'image.

**14.** Dispositif pour l'aide à l'observation d'une image médicale, comprenant :

un système pour fournir des données d'une image sous forme de matrice bidimensionnelle de pixels ayant des valeurs d'intensité numérisées,
un système d'affichage pour l'affichage de l'image,
un système de traitement d'images ayant accès aux données d'image, et au système d'affichage,

ce système de traitement d'image étant arrangé pour effectuer chacune des étapes selon le procédé conforme à l'une des revendications 1 à 13.

**Patentansprüche**

**1.** Verfahren zur Raumfilterung des Rauschens in einem Bild (J) in der Form einer Pixelmatrix [$P(x,y)$] mit verrauschten numerischen Intensitätswerten [$I(x,y)$], wobei das Verfahren folgende Schritte beinhaltet:

a) Auswahl in einem gleitenden Fenster [WD $(x_0,y_0)$], zentriert um ein momentanes Pixel [$P_0$ $(x_0,y_0)$], einer Anzahl ($N \neq 0$) zufällig ausgerichteter Elementarfilter [$F_1$, $F_2$, ...; $V_1$, $V_2$, ...] mit Trägern und einer Orientierungsachse [$P_{0Z1}$, $P_{0Z2}$, ... $P_{0ZN}$], die durch das momentane Pixel verläuft und mit einem oder mehreren Merkmalen, die aleatorische Werte haben können,

b) Kombination der Pixelintensitäten über den besagten einzelnen Trägern zur Bereitstellung einer elementaren Intensität, und Kombination der elementaren Intensitäten zur Bereitstellung einer auf das momentane Pixel anzuwendenden gefilterten Intensität [$R_0(x_0,y_0)$].

2. Verfahren nach Anspruch 1, in dem die Filterträger potenziell Merkmale haben mit einem oder mehreren Zufallswerten:

ihrer Anzahl (N) in der Serie,
eines Ausrichtungswinkels [$\theta_1$, $\theta_2$, ... $\theta_N$] zwischen der Orientiertingsachse [$P_{0Z1}$, $P_{0Z2}$, ..., $P_{0ZN}$] und einer Bezugsachse (OX), definiert in der zweidimensionalen Matrix,
einer definiert großen Anzahl an Pixeln, deren größte Dimension parallel zur Orientierungsachse verläuft,
einer Asymmetrie in Bezug auf das momentane Pixel,
eines mit dem Gewichtungskoeffizienten verbundenen, auf die Pixelintensitäten angewandten Koeffizienten.

3. Verfahren nach einem der Ansprüche 1 oder 2, in dem ein potenzielles Sub-Sampling des Pixels des Fensters ausgeführt wird, wobei das Start-Pixel des besagten Sub-Samplings zufällig gewählt wird.

4. Verfahren nach einem der Ansprüche 1 bis 3, in dem die besagten Filterträger eindimensionale Träger mit auf die Ausrichtungsachsen ausgerichteten Pixeln, oder zweidimensional sind, wobei die Dimension des parallel zur Orientierungsachse liegenden Trägers mindestens das Doppelte der transversalen Dimension beträgt.

5. Verfahren nach einem der Ansprüche 1 bis 4, in dem:

die potenziellen Ausrichtungswinkel [$\theta_1$, $\theta_2$,... $\theta_N$] festgelegt und regelmäßig im Raum verteilt sind,
die Anzahl (N), festgelegt oder zufällig, zufälliger Elementarfilter kleiner oder gleich der Anzahl ($N_{max}$) der Ausrichtungswinkel ist, und
die Ausrichtungsachsen der Träger dieser Elementarfilter nach festgelegten oder zufälligen Ausrichtungswinkeln angeordnet sind.

6. Verfahren nach Anspruch 5, in dem:

die zufälligen Elementarfilterträger das momentane Pixel beinhalten,

wobei dieses Verfahren neben dem Schritt a) und dem Schritt b) auch einen Schritt beinhaltet zur:

- a') Auswahl (SIG, KNN) der Pixel unter Berücksichtigung ihrer Intensität an jedem Elementarfilterträger nach einem Kriterium, das das Intensitätspixel nahe des momentanen Pixels zurückhält, um deren Zugehörigkeit zu einem selben Bildobjekt zu bewerten.

7. Verfahren nach Anspruch 6, in dem das Kriterium zur Pixelauswahl die Pixel mit einer Intensität [$I(x_0+u,y_0+v)$] zurückhält, damit der absolute Wert der Wert der Differenz zwischen der besagten Intensität und der Intensität [$I_0(x_0,y_0)$] des momentanen Pixels kleiner ist als ein Vielfaches (m) der Rausch-Standardabweichung ($\sigma_B$) im Bild (J).

8. Verfahren nach Anspruch 6, in dem:

das Kriteriums für die Pixelauswahl die Pixel als eine vorbestimmte Anzahl (K) im Träger zurückhält.

9. Verfahren nach einem der Ansprüche 7 oder 8, in dem die Kombination der Pixelintensitäten auf dem Träger linear ist, und die Kombination der elementaren Intensitäten von einem Durchschnitt nehmenden Filter (MEAN) durchgeführt wird.

10. Verfahren nach einem der Ansprüche 7 oder 8, in dem die Kombination der Pixelintensitäten auf dem Träger linear ist, und die Kombination der elementaren Intensitäten von einem Medianfilter (MED) durchgeführt wird.

11. Verfahren nach Anspruch 5, in dem:

die Anzahl der festgelegten Ausrichtungsachsen vier beträgt, in Richtung der Zeile, der Spalte und den zwei Diagonalen angeordnet, die durch das momentane Pixel im Fenster verlaufen,
die Träger, die auf beiden Seiten des momentanen Pixels liegen, angeordnet sind, um das momentane Pixel aus der Zeile ($H_1$, $H_2$), der Spalte ($V_1$, $V_2$), der ersten Diagonalen ($D_{11}$, $D_{12}$) und der zweiten Diagonalen ($D_{21}$, $D_{22}$), die durch das momentane Pixel verlaufen, auszuschließen,

das zentral im Fenster [WD(x$_0$,y$_0$)] gelegene momentane Pixel als spezifischer Träger betrachtet wird, und

die Kombination der elementaren Intensitäten die Intensität des momentanen Pixels berücksichtigt.

12. Verfahren nach Anspruch 11, in dem die Kombination der Pixelintensitäten auf dem Träger linear ist, und die Kombination der elementaren Intensitäten durch Medianfilter in zwei oder drei Stufen und unter Berücksichtigung der Intensität des momentanen Pixels ausgeführt wird.

13. Verfahren nach einem der Ansprüche 1 bis 12, in dem die definierten Schritte für ein zu verarbeitendes Pixel für alle zu verarbeitenden Pixel im Bild wiederholt werden.

14. Vorrichtung, um die Beobachtung eines medizinischen Bildes zu unterstützen, mit:

einem System zur Bereitstellung der Daten eines Bildes in der Form einer zweidimensionalen Pixelmatrix mit numerischen Intensitätswerten,
einem Anzeigesystem zum Anzeigen des Bildes,
einem Bildverarbeitungssystem mit Zugriff auf die Bilddaten und auf das Anzeigesystem,

wobei das Bildverarbeitungssystem angeordnet ist, um jeden der Schritte des den Ansprüchen 1 bis 13 entsprechenden Verfahrens durchzuführen.

**Claims**

1. A method for the spatial filtering of the noise in an image (J) in the form of a matrix of pixels [P(x,y)] having noisy digitized intensity values [I(x,y)], which method comprises the steps of:

a) selection, in a sliding window [WD(x$_0$,y$_0$)] centered around an instantaneous pixel [P$_0$(x$_0$, y$_0$)], of a number (N $\square$ 0) of random oriented elementary filters [F$_1$, F$_2$, ...; V$_1$, V$_2$, ...] having supports with an axis of orientation axis [P$_0$Z$_1$, P$_0$Z$_2$, ... P$_0$Z$_N$] passing through the instantaneous pixel and having characteristics, one or several of which have random values,
b) combination of the intensities of pixels on said supports individually, yielding an elementary intensity, and combination of the elementary intensities, yielding a filtered intensity [R$_0$(x$_0$,y$_0$)] to be applied to the instantaneous pixel.

2. A method as claimed in Claim 1, in which the filter supports have potentially among the characteristics of which one or more have random values:

- their number (N) in the series,
- an orientation angle [θ$_1$, θ$_2$, ... θ$_N$] between the axis of orientation [P$_0$Z$_1$, P$_0$Z$_2$, ..., P$_0$Z$_N$] and a reference axis (OX) defined in the two-dimensional matrix,
- a defined size in respect of number of pixels whose largest dimension extends parallel to the axis of orientation,
- an asymmetry with respect to the instantaneous pixel,
- a coefficient linked to the weighting coefficients applied to the intensities of the pixels.

3. A method as claimed in one of the Claims 1 or 2, in which sub-sampling of the pixels of the window is potentially carried out with a starting pixel of said sub-sampling being situated at random.

4. A method as claimed in one of the Claims 1 to 3, in which said filter supports are one-dimensional supports with the pixels aligned on the axes of orientation, or are two-dimensional supports with the dimension of the support parallel to the axis of orientation being at least twice the transverse dimension.

5. A method as claimed in one of the Claims 1 to 4, in which:

- the potential orientation angles [θ$_1$, θ$_2$,... θ$_N$] are fixed and regularly distributed in space,
- the number (N), being fixed or random, of random elementary filters is smaller than or equal to the number (N$_{max}$) of orientation angles, and
- the axes of orientation of the supports of these elementary filters are arranged according to said orientation angles in a fixed or random manner.

6. A method as claimed in Claim 5, in which:

- the random elementary filter supports include the instantaneous pixel,
  which method also comprises, between the step a) and the step b), a step:

- a') for selection (SIG, KNN) of the pixels as a function of their intensity on each elementary filter support in conformity with a criterion which retains the pixels of intensity near that of the instantaneous pixel in order to estimate their belonging to the same object of the image.

7. A method as claimed in Claim 6, in which the criterion for the selection of the pixels retains the pixels having an intensity $[I(x_0+u,y_0+v)]$ such that the absolute value of the difference between said intensity and the intensity $[I_0(x_0,y_0)]$ of the instantaneous pixel is smaller than a multiple (m) of the noise standard deviation $(\sigma_B)$ in the image (J).

**8.** A method as claimed in Claim 6, in which:

- for the selection of pixels the criterion retains the pixels as a predetermined number (K) in the support.

**9.** A method as claimed in one of the Claims 7 or 8, in which the combination of the intensities of the pixels on the supports is linear and the combination of the elementary intensities is performed by an averaging filter (MEAN).

**10.** A method as claimed in one of the Claims 7 or 8, in which the combination of the intensities of the pixels on the supports is linear and the combination of the elementary intensities is performed by a median filter (MED).

**11.** A method as claimed in Claim 5, in which:

- the number of fixed axes of orientation amounts to four, arranged in the direction of the row, the column and the two diagonals passing through the instantaneous pixel, in the window,
- the supports, situated to both sides of the instantaneous pixel, are positioned so as to exclude the instantaneous pixel in the row ($H_1$, $H_2$), in the column ($V_1$, $V_2$), on the first diagonal ($D_{11}$, $D_{12}$) and on the second diagonal ($D_{21}$, $D_{22}$) passing through the instantaneous pixel,
- the instantaneous pixel, being situated centrally in the window $[WD(x_0,y_0)]$, is considered to be a specific support, and
- the combination of the elementary intensities takes into account the intensity of the instantaneous pixel.

**12.** A method as claimed in Claim 11, in which the combination of the intensities of the pixels on the supports is linear, and the combination of the elementary intensities is performed by median filters at two or three levels, taking into account the intensity of the instantaneous pixel.

**13.** A method as claimed in one of the Claims 1 to 12, in which the steps defined for a pixel to be treated are repeated for all pixels to be treated in the image.

**14.** A device for assistance in the observation of a medical image, comprising:

- a system for supplying data of an image in the form of a two-dimensional matrix of pixels having digitized intensity values,
- a display system for displaying the image,
- an image processing system having access to the image data and to the display system, which image processing system is arranged to carry out the steps of the method claimed in any one of the Claims 1 to 13.

FIG.1

FIG.2

FIG. 3A

FIG. 3B

FIG.3C

FIG.3D

FIG.4 A

FIG.4B

FIG.4C

FIG.4D

18

FIG.5A

FIG.5B

FIG.5C

FIG.5D

FIG.6A

FIG.6B

FIG.6C

FIG.7A

FIG.7B